# EUROPEAN PATENT APPLICATION

(11) **EP 4 768 907 A1**
(43) Date of publication of application: **01.07.2026**
(21) Application number: 24855864.5
(22) Date of filing: 22.08.2024
(51) Int. Cl.: G01N 30/02, G01N 30/06

(54) **METHOD FOR MEASURING CONTENT OF HYDRAZINE IN CARBIDOPA-CONTAINING DRUG**

(30) Priority: 22.08.2023 CN 202311064067
(71) Applicant: Shanghai WD Pharmaceutical Co., Ltd, Shanghai 201203 (CN)
(72) Inventor: ZHANG, Danyong, Shanghai 201203 (CN); LYU, Pin, Shanghai 201203 (CN); WANG, Jingyi, Shanghai 201203 (CN); SHI, Jingmin, Shanghai 201203 (CN); HUANG, Ya, Shanghai 201203 (CN); FAN, Liang, Shanghai 201203 (CN); DONG, Liangchang, Shanghai 201203 (CN)
(74) Representative: Greaves Brewster LLP
(86) International application number: PCT/CN2024/113856
(87) International publication number: WO 2025/040142

(57) **Abstract**

A method for measuring the content of hydrazine in a carbidopa-containing drug, comprising the following steps: (1) in a solvent, under the action of acid, mixing a sample under test with an aldehydes substance, said sample being a carbidopa-containing drug, and hydrazine in said sample and the aldehydes substance being derivatized to obtain a test solution; and (2) measuring the content of the hydrazine in the test solution. Compared with the prior art, the method for measuring the content of hydrazine in a carbidopa-containing drug does not require pretreatment to remove carbidopa, introduces negligible hydrazine during measurement, is easy to operate, does not need to accurately control derivatization time and sample introduction time, and exhibits good repeatability and accurate measurements.

## Description

The present application claims the right of priority of Chinese patent application 2023110640677 filed on August 22, 2023. The contents of the Chinese patent application are incorporated herein by reference in their entirety.

### TECHNICAL FIELD

The present disclosure belongs to the technical field of analysis and relates to a method for determining the content of hydrazine in a carbidopa-containing drug.

### BACKGROUND

Patients with Parkinson's disease need to take a compound formulation of levodopa and carbidopa (hereinafter referred to as the carbidopa-levodopa formulation), especially early-stage Parkinson's patients and those with hereditary dopa-responsive dystonia (DRD). These patients require long-term use of this formulation, and over time, the dosage increases year by year. Therefore, the lower the control of hydrazine content in the formulation, the better, as it can avoid the higher carcinogenic risk associated with treating Parkinson's disease.

According to the International Council for Harmonisation (ICH) of Technical Requirements for Pharmaceuticals for Human Use guidelines on genotoxic impurity limits, the permissible level of genotoxic impurities in such formulations is approximately 20 to 50 ppm. Thus, establishing a highly sensitive, quantitatively accurate, reproducible, convenient, and effective method for determining the content of hydrazine is crucial for controlling hydrazine content in carbidopa-levodopa formulations, which is of significant importance for ensuring patient health.

Due to the characteristics of hydrazine compounds such as lack of chromophores, high reactivity, volatility, low relative molecular mass, relatively high polarity, and strong reducibility, the detection methods present special requirements in terms of sensitivity, selectivity, analyte stability, and matrix complexity. Therefore, the development and selection of analytical methods have different characteristics compared with other drug impurity analysis and detection. In addition, hydrazine compounds readily interact with silanol groups on chromatographic columns, causing severe peak tailing, which is a challenge in establishing analytical methods. Hydrazine is difficult to detect directly through chromatography or spectroscopy. However, it can be derivatized via its reactive amino group to form derivatives with strong UV absorption capacity. Within a certain concentration range, the absorption value of these derivatives shows a linear relationship with hydrazine content, allowing for the detection of hydrazine content using liquid chromatography. In the prior art, aldehydes are commonly used as derivatization reagents. The amino group undergoes a condensation reaction with the aldehyde group to form corresponding hydrazone compounds, which possess strong UV absorption, good stability, and high sensitivity. However, this method is greatly affected by the matrix of the analyzed sample.

When using existing techniques to determine hydrazine content in carbidopa active pharmaceutical ingredient, the hydrazine group in the carbidopa structure also participates in the derivatization reaction, leading to a significant increase in hydrazine content and affecting the accuracy of the detection results.

No pharmacopoeias in any country currently include controls for hydrazine content in carbidopa-containing formulations. Controls for hydrazine content in carbidopa active pharmaceutical ingredient are only specified in the European Pharmacopoeia (Carbidopa active pharmaceutical ingredient monograph in the European Pharmacopoeia (EP) 10.0). In the European Pharmacopoeia in the prior art, there is a method for detecting hydrazine in carbidopa active pharmaceutical ingredient. This method involves first removing carbidopa using ion-exchange resins, followed by a derivatization reaction with salicylaldehyde. However, this method has cumbersome processing steps and requires preventing sample degradation (which may generate hydrazine) during the carbidopa removal stage using resins. Furthermore, thin-layer chromatography is used for sample detection, which has low sensitivity. Literature reports (Kean, Thomas & Miller, J & Skellern, G & Snodin, David. (2007). Acceptance criteria for levels of hydrazine in substances for pharmaceutical use and analytical methods for its determination. Pharmeuropa scientific notes. 2006. 23-33.) indicate that some manufacturers have complained about the difficulty in implementing this method and expressed dissatisfaction. Consequently, a gas chromatography detection method was developed, though the literature does not provide specific details about it. The literature further compared the removal of carbidopa using ion-exchange resin and without ion-exchange resin. After derivatization with benzaldehyde and detection by liquid chromatography, it was found that the hydrazine content after removing carbidopa with ion-exchange resin was basically consistent with the result obtained by the European Pharmacopoeia method (3 ppm), while the result obtained without ion-exchange resin was abnormally high (239 ppm). This was mainly due to interference from carbidopa during the processing steps. Although this method is simpler and easier to implement than the European Pharmacopoeia method, it requires ion exchange to remove carbidopa, involves many steps, is time-consuming, and is affected by many factors, placing high demands on the operator's skills. Moreover, the above methods are only applicable to the detection of active pharmaceutical ingredients, and the formulation products usually contain a large number of excipients, which are still not necessarily applicable. In particular, the sustained-release and controlled-release formulations containing polymeric excipients are easy to form clumps during sample processing, making the above methods difficult to apply.

Therefore, there is a need for a hydrazine content determination method that is simple to operate, reproducible, and suitable for commercial product quality control. Furthermore, addressing the introduction of hydrazine content during the sample processing is very important.

### SUMMARY

The technical problem to be solved by the present disclosure is to provide a determination method capable of determining hydrazine content in a carbidopa-containing drug. Currently, the publicly available prior art lacks determination methods for hydrazine content in carbidopa-containing formulations, with only methods for determining hydrazine in carbidopa active pharmaceutical ingredient. Moreover, these methods require prior removal of carbidopa using ion-exchange resins, resulting in cumbersome and time-consuming procedures. Formulation products contain large amounts of excipients, particularly polymeric excipients, which are even more difficult to extract in aqueous solutions. Failure to remove carbidopa leads to abnormally high detection results with poor reproducibility. The present disclosure eliminates the need to remove carbidopa and requires no deduction of hydrazine background introduced during the sample processing (not exceeding 2 ppm). It employs highly sensitive and widely applicable liquid chromatography for detection, featuring simple experimental procedures, excellent reproducibility, and high accuracy, making it suitable for quality control in commercial production.

To achieve the above objectives, the present disclosure provides the following technical solutions:
The present disclosure provides a method for determining the content of hydrazine in a carbidopa-containing drug, comprising the following steps:
(1) mixing a test sample with an aldehyde substance in a solvent under the action of an acid, wherein the test sample is a carbidopa-containing drug, and the hydrazine in the test sample is derivatized with the aldehyde substance to obtain a test solution;
(2) detecting the content of hydrazine in the test solution;

the solvent is an alcohol solvent or a mixed solvent of an alcohol solvent and water;
in the solvent, the volume fraction of the alcohol solvent is 90% to 100%, wherein the volume fraction refers to the percentage of the alcohol solvent relative to the total volume of the solvent;
the alcohol solvent is one or more of methanol, ethanol, and isopropanol;
the aldehyde substance is one or more of benzaldehyde, salicylaldehyde, and dimethylaminobenzaldehyde.

In one embodiment, in step (1), the volume fraction of the alcohol solvent in the solvent is 90%, 92%, 94%, 96%, 98%, or 100%, wherein the volume fraction refers to the percentage of the alcohol solvent relative to the total volume of the solvent.

In one embodiment, in step (1), the alcohol solvent is methanol and/or ethanol, preferably methanol.

In one embodiment, in step (1), the concentration of the acid is preferably 0.01 to 5 mmol/L, such as 0.02 mmol/L, 0.5 mmol/L, 1 mmol/L, or 5 mmol/L, preferably 0.5 mmol/L; the concentration of the acid refers to the concentration of the acid in the reaction system of step (1).

In one embodiment, in step (1), the acid is conventional in the art, preferably one or more of HCl, HNO_{3,} and TFA (trifluoroacetic acid), more preferably HCl.

In one embodiment, in step (1), the test sample preferably contains 2 mg to 50 mg of carbidopa, more preferably contains 5 mg to 15 mg of carbidopa, such as a sample weight of 5 mg, 10 mg, 12.5 mg, or 15 mg.

In one embodiment, in step (1), the carbidopa-containing drug is preferably a carbidopa active pharmaceutical ingredient (preferably a carbidopa monohydrate active pharmaceutical ingredient) or a carbidopa-containing formulation; preferably, the formulation is an immediate-release or controlled-release formulation (*e.g.*, sustained-release formulation); more preferably, the carbidopa-containing formulation is a carbidopa tablet, a carbidopa-levodopa controlled-release tablet, a carbidopa-levodopa sustained-release capsule, a carbidopa-levodopa sustained-release tablet, a carbidopa-levodopa tablet, or an entacapone-carbidopa-levodopa tablet.

In one embodiment, in step (1), the carbidopa-containing drug is preferably carbidopa, carbidopa-levodopa, or entacapone-carbidopa-levodopa.

In one embodiment, in step (1), the aldehyde substance is benzaldehyde.

In one embodiment, in step (1), the volume percentage concentration of the aldehyde substance is 0.1% to 5%, such as 0.2%, 0.8%, 1.6%, or 2%, preferably 0.8%; the concentration of the aldehyde substance is the volume percentage concentration of the aldehyde substance in the reaction system of step (1).

In one embodiment, in step (1), the derivatization refers to the condensation reaction between the aldehyde substance and the hydrazine in the carbidopa-containing drug; preferably, the derivatization is the condensation reaction between benzaldehyde and the hydrazine in the carbidopa-containing drug to form a hydrazone substance.

In one embodiment, in step (1), the time for derivatization is preferably 1 to 10 minutes, such as 1 minute, 2 minutes, 3 minutes, 5 minutes, or 10 minutes, preferably 3 minutes.

In one embodiment, in step (1), the derivatization may comprise conventional mixing operations, such as vortexing, shaking, and stirring, preferably vortexing.

In one embodiment, in step (1), the derivatization reaction system consists of the solvent, the acid, the carbidopa-containing drug, and the aldehyde substance.

In one embodiment, in step (1), the derivatization may further comprise a filtration step; the filtration is preferably performed using a nylon filter membrane; the nylon filter membrane preferably has a pore size of 0.45 µm.

In one embodiment, in step (2), the detection determines the hydrazine content in the carbidopa-containing drug by determining the content of the derivatization product in the test solution.

In one embodiment, in step (2), the time from formulation of the test solution to injection for detection does not require special control, preferably within 10 minutes, more preferably within 5 minutes, even more preferably within 3 minutes, for example, the prepared test solution is immediately injected for detection.

In one embodiment, in step (2), the detection employs conventional detection methods in the art, preferably using a liquid chromatography method, a gas chromatography method, a thin-layer chromatography method, or an ultraviolet spectrophotometry method, more preferably a liquid chromatography method.

In one embodiment, the detection method further comprises a step of preparing a reference solution, which can be prepared by conventional methods, for example, by replacing the carbidopa-containing drug with a hydrazine reference substance (such as hydrazine dihydrochloride) using the same method as described for the test solution formulation.

In one embodiment, in step (2), when the liquid chromatography method is used for detection, the chromatographic column in the liquid chromatography method is a Waters Xbridge C18 column, preferably a Waters Xbridge C18 4.6-mm×10-cm 5 µm column.

In one embodiment, in step (2), when the liquid chromatography method is used for detection, mobile phase A is acetonitrile, mobile phase B is an aqueous solution of 0.01 to 0.1% disodium edetate, and the volume ratio of mobile phase A to mobile phase B is (25:75) to (75:25).

In one embodiment, in step (2), when the liquid chromatography method is used for detection, mobile phase A is acetonitrile, mobile phase B is an aqueous solution of 0.03% disodium edetate, and the volume ratio of mobile phase A to mobile phase B is 55:45.

In one embodiment, in step (2), when the liquid chromatography method is used for detection, the detection wavelength is 310 nm.

In one embodiment, in step (2), when the liquid chromatography method is used for detection, the flow rate is 1.5 mL/min.

In one embodiment, in step (2), when the liquid chromatography method is used for detection, the column temperature is 35°C.

In one embodiment, in step (2), when the liquid chromatography method is used for detection, the test solution and the reference solution are separately injected into the liquid chromatograph, respectively, preferably with an injection volume of 20 µL.

In one embodiment, the method for determining the content of hydrazine in the carbidopa-containing drug comprises the following steps:
(1) mixing a test sample with benzaldehyde in methanol under the action of hydrogen chloride, wherein the test sample is a carbidopa-containing drug, and the hydrazine in the test sample is derivatized with the aldehyde substance to obtain a test solution;
(2) detecting the content of hydrazine in the test solution by a liquid chromatography method.

In one embodiment, the method for determining the content of hydrazine in a carbidopa-containing drug comprises the following steps:
(1) mixing (for example, mixing for 10 to 15 seconds) a carbidopa-containing drug with a solution of hydrogen chloride in methanol (for example, with 1 mL of a solution of 2.5 mmol/L hydrogen chloride in methanol), then performing derivatization with a solution of benzaldehyde in methanol (for example, with 1 mL of a solution of 0.25%, 1.0%, or 2.0% benzaldehyde in methanol) to obtain a test solution;
(2) immediately detecting the content of hydrazine in the test solution by a liquid chromatography method.

The determination method of the present disclosure can also be applied to benserazide; the benserazide may be a benserazide active pharmaceutical ingredient or a benserazide-containing formulation.

Based on common knowledge in the art, the above preferred conditions can be arbitrarily combined to obtain preferred examples of the present disclosure.

The reagents and raw materials used in the present disclosure are commercially available, and all reagents used for sample processing are of analytical grade.

The positive and progressive effects of the present disclosure are as follows:
1. Compared with the prior art, the method of the present disclosure eliminates the need for pretreatment to remove carbidopa, introduces negligible hydrazine during the sample processing, has simple operation without requiring precise control of the time for derivatization and injection, and demonstrates good reproducibility and accurate quantification. In the prior art, the presence of carbidopa during experimental procedures leads to hydrazine content detection results being higher than the true values, thus requiring deduction of hydrazine content generated during the reaction process. However, the detection results exhibit poor reproducibility. The method of the present disclosure reduces the hydrazine content introduced during the reaction process to negligible levels (not exceeding 2 ppm), significantly improves reproducibility, and facilitates quality control and method popularization for formulation products containing carbidopa.
2. Compared with the prior art, the method of the present disclosure can be applied to a significantly broader range of products for determination. The method of the prior art can only be applied to carbidopa active pharmaceutical ingredient, while the method of the present disclosure is not only applicable to carbidopa active pharmaceutical ingredient but also to various immediate-release formulation products and sustained/controlled-release formulation products containing carbidopa.

### BRIEF DESCRIPTION OF THE DRAWINGS

FIG. 1 shows the chromatogram of the blank solvent in the specificity investigation of the present disclosure;
FIG. 2 shows the chromatogram of the reference solution in the specificity investigation of the present disclosure;
FIG. 3 shows the chromatogram of the blank test solution in the specificity investigation of the present disclosure;
FIG. 4 shows the chromatogram of the test solution in the specificity investigation of the present disclosure.

### DETAILED DESCRIPTION OF THE PREFERRED EMBODIMENT

Hereinafter, the present disclosure will be further described by way of examples, but the present disclosure is not limited to the scope of the described examples. The experimental methods for which specific conditions are not specified in the following examples are selected according to the conventional methods and conditions, or according to the commercial instructions.
50% methanol refers to an aqueous solution of methanol with a volume fraction of 50%
A solution of 1% benzaldehyde in methanol refers to a methanol solution of benzaldehyde with a volume fraction of 1%
A solution of hydrogen chloride in methanol is prepared by mixing concentrated hydrochloric acid and methanol to the corresponding concentration

The batch numbers of the test samples used in the present disclosure are as follows:

| Test sample | Batch number |
|---|---|
| Carbidopa active pharmaceutical ingredient | 2109218 |
| Sinemet IR (Merck Sharp & Dohme) | W019112 |
| Sinemet CR (Merck Sharp & Dohme) | W005272 |
| WD-1603 (WD Pharmaceutical) | 2022120601 |
| WD-2010 (WD Pharmaceutical) | 2022021201 |

### Example 1: Determination of hydrazine content in carbidopa-levodopa controlled-release tablets (WD-1603, WD Pharmaceutical) using a solution of 2.5 mmol/L hydrogen chloride in methanol with different methanol ratios (50%/100% methanol)

Chromatographic conditions: Waters Xbridge C18 4.6-mm×10-cm 5 µm column was used; the mobile phase was acetonitrile-water (containing 0.03% disodium edetate) (55:45); the determination wavelength was 310 nm; the flow rate was 1.5 mL/min; the column temperature was 35°C.

Preparation of reference standard: Approximately 25.6 mg of hydrazine dihydrochloride reference standard was accurately weighed, dissolved in water, and diluted to prepare a solution containing approximately 6.25 µg of hydrazine per 1 mL. An appropriate amount was accurately measured and diluted with a solution of 2.5 mmol/L hydrogen chloride in methanol (50%/100% methanol) to prepare a solution containing approximately 0.625 µg of hydrazine per 1 mL, which served as the reference standard stock solution. 1 mL of the reference standard stock solution was accurately measured, placed in a stoppered test tube, and 4 mL of a solution of 1% benzaldehyde in methanol was accurately added. After tightly stoppering, the mixture was vigorously vortexed for 3 minutes on a vortex mixer to prepare a reference solution.

Preparation of test solution: Ten carbidopa-levodopa controlled-release tablets were accurately weighed and ground into fine powder. An appropriate amount of the fine powder (equivalent to approximately 12.5 mg of carbidopa) was accurately weighed and placed in a stoppered test tube. 1 mL of a solution of 2.5 mmol/L hydrogen chloride in methanol (50%/100% methanol) was accurately added and immediately vortexed for 10-15 seconds to wet the powder. Then, 4 mL of a solution of 1% benzaldehyde in methanol was accurately added. The tube was tightly stoppered and vigorously vortexed for 3 minutes on a vortex mixer. The mixture was filtered through a 0.45 µm nylon filter membrane, and the subsequent filtrate was used as the test solution (which was injected immediately).

20 µL each of the test solution and reference solution were accurately measured and injected into the liquid chromatograph, respectively, and the chromatograms were recorded. The hydrazine content was calculated using the external standard method based on peak areas, and the results are detailed in Table 1 below.

**Table 1. Detection results of hydrazine content using methanol solutions with different ratios**

| Sample name | Weight (mg) | Detected concentration (µg/mL) | Result (ppm) | Average (ppm) |
|---|---|---|---|---|
| 50%MeOH-1 | 142.06 | 0.2362 | 18.81 | 18 |
| 50%MeOH-2 | 142.81 | 0.2209 | 17.50 | |
| 100%MeOH-1 | 142.33 | 0.2163 | 17.20 | 17 |
| 100%MeOH-2 | 142.98 | 0.2066 | 16.35 | |

### Example 2: Determination of hydrazine content in carbidopa-levodopa controlled-release tablets (WD-1603, WD Pharmaceutical) using benzaldehyde solutions with different volume percentage concentrations (0.25%/1.0%/2.0%)

Chromatographic conditions: Waters Xbridge C18 4.6-mm×10-cm 5 µm column was used; the mobile phase was acetonitrile-water (containing 0.03% disodium edetate) (55:45); the detection wavelength was 310 nm; the flow rate was 1.5 mL/min; the column temperature was 35°C.

Preparation of reference standard: Approximately 25.6 mg of hydrazine dihydrochloride reference standard was accurately weighed, dissolved in water, and diluted to prepare a solution containing approximately 6.25 µg of hydrazine per 1 mL. An appropriate amount was accurately measured and diluted with a solution of 2.5 mmol/L hydrogen chloride in methanol to prepare a solution containing approximately 0.625 µg of hydrazine per 1 mL, which served as the reference standard stock solution. 1 mL of the reference standard stock solution was accurately measured, placed in a stoppered test tube, and 4 mL of a solution of **benzaldehyde (0.25%/1.0%/2.0%)** in methanol was accurately added. After tightly stoppering, the mixture was vigorously vortexed for 3 minutes on a vortex mixer to prepare a reference solution.

Preparation of test solution: Ten carbidopa-levodopa controlled-release tablets were accurately weighed and ground into fine powder. An appropriate amount of the fine powder (equivalent to approximately 12.5 mg of carbidopa) was accurately weighed into a stoppered test tube. 1 mL of a solution of 2.5 mmol/L hydrogen chloride in methanol was accurately added, followed by immediate vortexing for 10-15 seconds to wet the powder. Then, 4 mL of a solution of **benzaldehyde (0.25%/1.0%/2.0%)** in methanol was accurately added. The tube was tightly stoppered and vigorously vortexed on a vortex mixer for 3 minutes. The mixture was filtered through a 0.45 µm nylon filter membrane, and the subsequent filtrate was used as the test solution (which was immediately injected).

20 µL each of the test solution and reference solution were accurately measured and injected into the liquid chromatograph, respectively, and the chromatograms were recorded. The hydrazine content was calculated using the external standard method based on peak areas, and the results are shown in Table 2 below.

**Table 2. Detection results of hydrazine content using benzaldehyde solutions with different concentrations**

| Sample name | Weight (mg) | Detected concentration (µg/mL) | Result (ppm) | Average (ppm) |
|---|---|---|---|---|
| 0.25%BA-1 | 142.59 | 0.1913 | 15.22 | 15 |
| 0.25%BA-2 | 142.30 | 0.1892 | 15.08 | |
| 1.0%BA-1 | 142.48 | 0.2126 | 16.89 | 17 |
| 1.0%BA-2 | 142.98 | 0.2066 | 16.35 | |
| 2.0%BA-1 | 142.17 | 0.1517 | 12.10 | 12 |
| 2.0%BA-2 | 142.65 | 0.1605 | 12.76 | |

### Example 3: Determination of hydrazine content in carbidopa-levodopa controlled-release tablets (WD-1603, WD Pharmaceutical) using different sample amounts (equivalent to approximately 5 mg/10 mg/15 mg of carbidopa)

Chromatographic conditions: Waters Xbridge C18 4.6-mm×10-cm 5 µm column was used; the mobile phase was acetonitrile-water (containing 0.03% disodium edetate) (55:45); the detection wavelength was 310 nm; the flow rate was 1.5 mL/min; the column temperature was 35°C.

Preparation of reference standard: Approximately 25.6 mg of hydrazine dihydrochloride reference standard was accurately weighed, dissolved in water, and diluted to prepare a solution containing approximately 6.25 µg of hydrazine per 1 mL. An appropriate amount was accurately measured and diluted with a solution of 2.5 mmol/L hydrogen chloride in methanol to prepare a solution containing approximately 0.625 µg of hydrazine per 1 mL, which served as the reference standard stock solution. 1 mL of the reference standard stock solution was accurately measured, placed in a stoppered test tube, and 4 mL of a solution of 1% benzaldehyde in methanol was accurately added. After tightly stoppering, the mixture was vigorously vortexed for 3 minutes on a vortex mixer to prepare a reference solution.

Preparation of test solution: Ten carbidopa-levodopa controlled-release tablets were accurately weighed and ground into fine powder. An appropriate amount of the fine powder (**equivalent to approximately 5 mg/10 mg/15 mg of carbidopa**) was accurately weighed and placed in a stoppered test tube. 1 mL of a solution of 2.5 mmol/L hydrogen chloride in methanol was accurately added and immediately vortexed for 10-15 seconds to wet the powder. Then, 4 mL of a solution of 1% benzaldehyde in methanol was accurately added. The tube was tightly stoppered and vigorously vortexed for 3 minutes on a vortex mixer. The mixture was filtered through a 0.45 µm nylon filter membrane, and the subsequent filtrate was used as the test solution (which was injected immediately).

20 µL each of the test solution and reference solution were accurately measured and injected into the liquid chromatograph, respectively, and the chromatograms were recorded. The hydrazine content was calculated using the external standard method based on peak areas, and the results are shown in Table 3 below.

**Table 3. Detection results of hydrazine content using different sample amounts**

| Sample name | Weight (mg) | Detected concentration (µg/mL) | Result (ppm) | Average (ppm) |
|---|---|---|---|---|
| 5mg-1 | 57.19 | 0.0718 | 14.22 | 14 |
| 5mg-2 | 57.19 | 0.0650 | 12.87 | |
| 10mg-1 | 114.19 | 0.1319 | 13.08 | 13 |
| 10mg-2 | 114.06 | 0.1359 | 13.50 | |
| 15mg-1 | 170.70 | 0.2555 | 16.96 | 17 |
| 15mg-2 | 170.54 | 0.2646 | 17.58 | |

### Example 4: Determination of hydrazine content in carbidopa-levodopa controlled-release tablets (WD-1603, WD Pharmaceutical) using different types of acids (hydrogen chloride/nitric acid/trifluoroacetic acid)

Chromatographic conditions: Waters Xbridge C18 4.6-mm×10-cm 5 µm column was used; the mobile phase was acetonitrile-water (containing 0.03% disodium edetate) (55:45); the determination wavelength was 310 nm; the flow rate was 1.5 mL/min; the column temperature was 35°C.

Preparation of reference standard: Approximately 25.6 mg of hydrazine dihydrochloride reference standard was accurately weighed, dissolved in water, and diluted to prepare a solution containing approximately 6.25 µg of hydrazine per 1 mL. An appropriate amount was accurately measured and diluted with a solution of 2.5 mmol/L **hydrogen chloride/nitric acid/trifluoroacetic acid** in methanol to prepare a solution containing approximately 0.625 µg of hydrazine per 1 mL, which served as the reference standard stock solution. 1 mL of the reference standard stock solution was accurately measured, placed in a stoppered test tube, and 4 mL of a solution of 1% benzaldehyde in methanol was accurately added. After tightly stoppering, the mixture was vigorously vortexed for 3 minutes on a vortex mixer to prepare a reference solution.

Preparation of test solution: Ten carbidopa-levodopa controlled-release tablets were accurately weighed and ground into fine powder. An appropriate amount of the fine powder (equivalent to approximately 12.5 mg of carbidopa) was accurately weighed and placed in a stoppered test tube. 1 mL of a solution of 2.5 mmol/L **hydrogen chloride/nitric acid/trifluoroacetic acid** in methanol was accurately added and immediately vortexed for 10-15 seconds to wet the powder. Then, 4 mL of a solution of 1% benzaldehyde in methanol was accurately added. The tube was tightly stoppered. The mixture was vigorously vortexed for 3 minutes on a vortex mixer and filtered through a 0.45 µm nylon filter membrane, and the subsequent filtrate was used as the test solution (which was injected immediately).

20 µL each of the test solution and reference solution were accurately measured and injected into the liquid chromatograph, respectively, and the chromatograms were recorded. The hydrazine content was calculated using the external standard method based on peak areas, and the results are shown in Table 4 below.

**Table 4. Detection results of hydrazine content using different types of acids**

| Sample name | Weight (mg) | Detected concentration (µg/mL) | Result (ppm) | Average (ppm) |
|---|---|---|---|---|
| HCl-1 | 140.92 | 0.2105 | 16.80 | 16 |
| HCl-2 | 140.86 | 0.1872 | 14.95 | |
| HNO₃-1 | 142.15 | 0.1842 | 14.58 | 14 |
| HNO₃-2 | 141.95 | 0.1815 | 14.38 | |
| TFA-1 | 141.87 | 0.1821 | 14.44 | 14 |
| TFA-2 | 142.20 | 0.1810 | 14.32 | |

### Example 5: Determination of hydrazine content in carbidopa-levodopa controlled-release tablets (WD-1603, WD Pharmaceutical) using different acid concentrations (0.1/2.5/5 mmol/L)

Chromatographic conditions: Waters Xbridge C18 4.6-mm×10-cm 5 µm column was used; the mobile phase was acetonitrile-water (containing 0.03% disodium edetate) (55:45); the detection wavelength was 310 nm; the flow rate was 1.5 mL/min; the column temperature was 35°C.

Preparation of reference standard: Approximately 25.6 mg of hydrazine dihydrochloride reference standard was accurately weighed, dissolved in water, and diluted to prepare a solution containing approximately 6.25 µg of hydrazine per 1 mL. An appropriate amount was accurately measured and diluted with a solution of **0.1/2.5/5 mmol/L** hydrogen chloride in methanol to prepare a solution containing approximately 0.625 µg of hydrazine per 1 mL, which served as the reference standard stock solution. 1 mL of the reference standard stock solution was accurately measured, placed in a stoppered test tube, and 4 mL of a solution of 1% benzaldehyde in methanol was accurately added. After tightly stoppering, the mixture was vigorously vortexed for 3 minutes on a vortex mixer to prepare a reference solution.

Preparation of test solution: Ten carbidopa-levodopa controlled-release tablets were accurately weighed and ground into fine powder. An appropriate amount of the fine powder (equivalent to approximately 12.5 mg of carbidopa) was accurately weighed and placed in a stoppered test tube. 1 mL of a solution of **0.1/2.5/5 mmol/L** hydrogen chloride in methanol was accurately added and immediately vortexed for 10-15 seconds to wet the powder. Then, 4 mL of a solution of 1% benzaldehyde in methanol was accurately added. The tube was tightly stoppered. The mixture was vigorously vortexed for 3 minutes on a vortex mixer and filtered through a 0.45 µm nylon filter membrane, and the subsequent filtrate was used as the test solution (which was injected immediately).

20 µL each of the test solution and reference solution were accurately measured and injected into the liquid chromatograph, respectively, and the chromatograms were recorded. The hydrazine content was calculated using the external standard method based on peak areas, and the results are shown in Table 5 below.

**Table 5. Detection results of hydrazine content using different acid concentrations**

| Sample name | Weight (mg) | Detected concentration (µg/mL) | Result (ppm) | Average (ppm) |
|---|---|---|---|---|
| 0.1mmol HCl-1 | 142.13 | 0.2056 | 16.37 | 16 |
| 0.1mmol HCl-2 | 142.91 | 0.1928 | 15.27 | |
| 2.5mmol HCl-1 | 142.48 | 0.2126 | 16.89 | 17 |
| 2.5mmol HCl-2 | 142.98 | 0.2066 | 16.35 | |
| 5mmol HCl-1 | 142.38 | 0.2605 | 20.70 | 20 |
| 5mmol HCl-2 | 142.31 | 0.2533 | 20.14 | |

### Example 6: Determination of hydrazine content in carbidopa-levodopa controlled-release tablets (WD-1603, WD Pharmaceutical) using different types of alcohols (methanol/ethanol)

Chromatographic conditions: Waters Xbridge C18 4.6-mm×10-cm 5 µm column was used; the mobile phase was acetonitrile-water (containing 0.03% disodium edetate) (55:45); the detection wavelength was 310 nm; the flow rate was 1.5 mL/min; the column temperature was 35°C.

Preparation of reference standard: Approximately 25.6 mg of hydrazine dihydrochloride reference standard was accurately weighed, dissolved in water, and diluted to prepare a solution containing approximately 6.25 µg of hydrazine per 1 mL. An appropriate amount was accurately measured and diluted with a solution of 2.5 mmol/L hydrogen chloride in **methanol (ethanol)** to prepare a solution containing approximately 0.625 µg of hydrazine per 1 mL, which served as the reference standard stock solution. 1 mL of the reference standard stock solution was accurately measured, placed in a stoppered test tube, and 4 mL of a solution of 1% benzaldehyde in **methanol (ethanol)** was accurately added. After tightly stoppering, the mixture was vigorously vortexed for 3 minutes on a vortex mixer to prepare a reference solution.

Preparation of test solution: Ten carbidopa-levodopa controlled-release tablets were accurately weighed and ground into fine powder. An appropriate amount of the fine powder (equivalent to approximately 12.5 mg of carbidopa) was accurately weighed and placed in a stoppered test tube. 1 mL of a solution of 2.5 mmol/L hydrogen chloride in **methanol (ethanol)** was accurately added and immediately vortexed for 10-15 seconds to wet the powder. Then, 4 mL of a solution of 1% benzaldehyde in **methanol (ethanol)** was accurately added. The tube was tightly stoppered. The mixture was vigorously vortexed for 3 minutes on a vortex mixer and filtered through a 0.45 µm nylon filter membrane, and the subsequent filtrate was used as the test solution (which was injected immediately).

20 µL each of the test solution and reference solution were accurately measured and injected into the liquid chromatograph, respectively, and the chromatograms were recorded. The hydrazine content was calculated using the external standard method based on peak areas, and the results are shown in Table 6 below.

**Table 6. Detection results of hydrazine content using different types of alcohols**

| Sample name | Weight (mg) | Detected concentration (µg/mL) | Result (ppm) | Average (ppm) |
|---|---|---|---|---|
| MeOH-1 | 140.92 | 0.2105 | 16.80 | 16 |
| MeOH-2 | 140.86 | 0.1872 | 14.95 | |
| EtOH-1 | 141.68 | 0.0938 | 7.45 | 8 |
| EtOH-2 | 141.83 | 0.1052 | 8.34 | |

### Example 7: Determination of hydrazine content in carbidopa-levodopa controlled-release tablets (WD-1603, WD Pharmaceutical) at different reaction times (1/2/3/5/10 minutes)

Chromatographic conditions: Waters Xbridge C18 4.6-mm×10-cm 5 µm column was used; the mobile phase was acetonitrile-water (containing 0.03% disodium edetate) (55:45); the detection wavelength was 310 nm; the flow rate was 1.5 mL/min; the column temperature was 35°C.

Preparation of reference standard: Approximately 25.6 mg of hydrazine dihydrochloride reference standard was accurately weighed, dissolved in water, and diluted to prepare a solution containing approximately 6.25 µg of hydrazine per 1 mL. An appropriate amount was accurately measured and diluted with a solution of 2.5 mmol/L hydrogen chloride in methanol to prepare a solution containing approximately 0.625 µg of hydrazine per 1 mL, which served as the reference standard stock solution. 1 mL of the reference standard stock solution was accurately measured, placed in a stoppered test tube, and 4 mL of a solution of 1% benzaldehyde in methanol was accurately added. After tightly stoppering, the mixture was vigorously vortexed for 3 minutes on a vortex mixer to prepare a reference solution.

Preparation of test solution: Ten carbidopa-levodopa controlled-release tablets were accurately weighed and ground into fine powder. An appropriate amount of the fine powder (equivalent to approximately 12.5 mg of carbidopa) was accurately weighed and placed in a stoppered test tube. 1 mL of a solution of 2.5 mmol/L hydrogen chloride in methanol was accurately added and immediately vortexed for 10-15 seconds to wet the powder. Then, 4 mL of a solution of 1% benzaldehyde in methanol was accurately added. The tube was tightly stoppered. The mixture was vigorously vortexed for **1/2/3/5/10** minutes on a vortex mixer and filtered through a 0.45 µm nylon filter membrane, and the subsequent filtrate was used as the test solution (which was injected immediately).

20 µL each of the test solution and reference solution were accurately measured and injected into the liquid chromatograph, respectively, and the chromatograms were recorded. The hydrazine content was calculated using the external standard method based on peak areas, and the results are shown in Table 7 below.

**Table 7. Detection results of hydrazine content at different reaction times**

| Sample name | Weight (mg) | Detected concentration (µg/mL) | Result (ppm) | Average (ppm) |
|---|---|---|---|---|
| 1min-1 | 142.02 | 0.1492 | 11.86 | 12 |
| 1min-2 | 142.02 | 0.1562 | 12.42 | |
| 2min-1 | 141.94 | 0.1740 | 13.84 | 14 |
| 2min-2 | 141.70 | 0.1737 | 13.84 | |
| 3min-1 | 141.66 | 0.1758 | 14.01 | 15 |
| 3min-2 | 141.76 | 0.1951 | 15.54 | |
| 5min-1 | 141.66 | 0.1801 | 14.36 | 14 |
| 5min-2 | 141.99 | 0.1818 | 14.46 | |
| 10min-1 | 141.65 | 0.2111 | 16.83 | 16 |
| 10min-2 | 141.88 | 0.1977 | 15.73 | |

It can be seen from the results in the above table that when using a methanol solution, even with prolonged reaction time, the hydrazine group in the carbidopa structure essentially does not participate in the derivatization reaction. There is no need to remove carbidopa or subtract the hydrazine background introduced during the sample processing. Both the stability and accuracy of the detection results are satisfactory.

### Example 8: Determination of hydrazine content in different carbidopa-containing products

Chromatographic conditions: Waters Xbridge C18 4.6-mm×10-cm 5 µm column was used; the mobile phase was acetonitrile-water (containing 0.03% disodium edetate) (55:45); the detection wavelength was 310 nm; the flow rate was 1.5 mL/min; the column temperature was 35°C.

Preparation of reference standard: Approximately 25.6 mg of hydrazine dihydrochloride reference standard was accurately weighed, dissolved in water, and diluted to prepare a solution containing approximately 6.25 µg of hydrazine per 1 mL. An appropriate amount was accurately measured and diluted with a solution of 2.5 mmol/L hydrogen chloride in methanol to prepare a solution containing approximately 0.625 µg of hydrazine per 1 mL, which served as the reference standard stock solution. 1 mL of the reference standard stock solution was accurately measured, placed in a stoppered test tube, and 4 mL of a solution of 1% benzaldehyde in methanol was accurately added. After tightly stoppering, the mixture was vigorously vortexed for 3 minutes on a vortex mixer to prepare a reference solution.

Preparation of test solution: An appropriate amount of the fine powder (equivalent to approximately 12.5 mg of carbidopa) was accurately weighed and placed in a stoppered test tube. 1 mL of a solution of 2.5 mmol/L hydrogen chloride in methanol was accurately added and immediately vortexed for 10-15 seconds to wet the powder. Then, 4 mL of a solution of 1% benzaldehyde in methanol was accurately added. The tube was tightly stoppered. The mixture was vigorously vortexed for 3 minutes on a vortex mixer and filtered through a 0.45 µm nylon filter membrane, and the subsequent filtrate was used as the test solution (which was injected immediately).

20 µL each of the test solution and reference solution were accurately measured and injected into the liquid chromatograph, respectively, and the chromatograms were recorded. The hydrazine content was calculated using the external standard method based on peak areas, and the results are shown in Table 8 below.

**Table 8. Detection results of hydrazine in different carbidopa-containing drugs**

| Sample name | Batch number | Result (ppm) | Average (ppm) |
|---|---|---|---|
| Carbidopa active pharmaceutical ingredient | 2209062 | 2.18 | 2 |
| | | 2.27 | |
| Sinemet IR (Merck Sharp & Dohme) | W019112 | 4.56 | 5 |
| | | 4.59 | |
| Sinemet CR (Merck Sharp & Dohme) | W005272 | 4.94 | 5 |
| | | 5.12 | |
| WD-1603 (WD Pharmaceutical) | 2022120601 | 16.89 | 17 |
| | | 16.35 | |
| WD-2010 (WD Pharmaceutical) | 2022021201 | 3.03 | 3 |
| | | 3.35 | |

### Example 9: Determination of hydrazine content in carbidopa-levodopa controlled-release tablets (WD-1603, WD Pharmaceutical)

Chromatographic conditions: Waters Xbridge C18 4.6-mm×10-cm 5 µm column was used; the mobile phase was acetonitrile-water (containing 0.03% disodium edetate) (55:45); the detection wavelength was 310 nm; the flow rate was 1.5 mL/min; the column temperature was 35°C.

Preparation of reference standard: Approximately 25.6 mg of hydrazine dihydrochloride reference standard was accurately weighed, dissolved in water, and diluted to prepare a solution containing approximately 6.25 µg of hydrazine per 1 mL. An appropriate amount was accurately measured and diluted with a solution of 2.5 mmol/L hydrogen chloride in methanol to prepare a solution containing approximately 0.625 µg of hydrazine per 1 mL, which served as the reference standard stock solution. 1 mL of the reference standard stock solution was accurately measured, placed in a stoppered test tube, and 4 mL of a solution of 1% benzaldehyde in methanol was accurately added. After tightly stoppering, the mixture was vigorously vortexed for 3 minutes on a vortex mixer to prepare a reference solution.

Preparation of test solution: Ten carbidopa-levodopa controlled-release tablets were accurately weighed and ground into fine powder. An appropriate amount of the fine powder (equivalent to approximately 12.5 mg of carbidopa) was accurately weighed and placed in a stoppered test tube. 1 mL of a solution of 2.5 mmol/L hydrogen chloride in methanol and 4 mL of a solution of 1% benzaldehyde in methanol were accurately added. The tube was tightly stoppered. The mixture was vigorously vortexed for 3 minutes on a vortex mixer and filtered through a 0.45 µm nylon filter membrane, and the subsequent filtrate was used as the test solution (which was injected immediately).

20 µL each of the test solution and reference solution were accurately measured and injected into the liquid chromatograph, respectively, and the chromatograms were recorded. The hydrazine content was calculated using the external standard method based on peak areas, and the detection results are shown in Table 9 below.

**Table 9. Detection results of hydrazine in carbidopa-levodopa controlled-release tablets**

| No. | Weight (mg) | Hydrazine content (µg/g) | Average (µg/g) | RSD % |
|---|---|---|---|---|
| 1 | 139.33 | 19.79 | 20 | 0.90 |
| 2 | 139.60 | 19.62 | | |

### Example 10

The determination of hydrazine content in carbidopa active pharmaceutical ingredient was conducted using a solution of 2.5 mmol/L hydrogen chloride in methanol (water) with different methanol ratios (0%/50%/60%/70%/80%/90%/100% methanol) at different reaction times (1/2/3/5/10 minutes). Chromatographic conditions: Waters Xbridge C18 4.6-mm×10-cm 5 µm column was used; the mobile phase was acetonitrile-water (containing 0.03% disodium edetate) (55:45); the detection wavelength was 310 nm; the flow rate was 1.5 mL/min; the column temperature was 35°C.

Preparation of reference standard: Approximately 25.6 mg of hydrazine dihydrochloride reference standard was accurately weighed, dissolved in water, and diluted to prepare a solution containing approximately 6.25 µg of hydrazine per 1 mL. An appropriate amount was accurately measured and diluted with a solution of 2.5 mmol/L hydrogen chloride in methanol (water) (0%/50%/60%/70%/80%/90%/100% methanol) to prepare a solution containing approximately 0.625 µg of hydrazine per 1 mL, which served as the reference standard stock solution. 1 mL of the reference standard stock solution was accurately measured, placed in a stoppered test tube, and 4 mL of a solution of 1% benzaldehyde in methanol was accurately added. After tightly stoppering, the mixture was vigorously vortexed for 3 minutes on a vortex mixer to prepare a reference solution.

Preparation of test solution: Approximately 13.5 mg of carbidopa monohydrate active pharmaceutical ingredient (equivalent to 12.5 mg of carbidopa) was accurately weighed and placed in a stoppered test tube. 1 mL of a solution of 2.5 mmol/L hydrogen chloride in methanol (water) (0%/50%/60%/70%/80%/90%/100% methanol) was accurately added and immediately vortexed for 10-15 seconds to wet the powder. Then, 4 mL of a solution of 1% benzaldehyde in methanol was accurately added. The tube was tightly stoppered. The mixture was vigorously vortexed for **1/2/3/5/10** minutes on a vortex mixer and filtered through a 0.45 µm nylon filter membrane, and the subsequent filtrate was used as the test solution (which was injected immediately).

20 µL each of the test solution and reference solution were accurately measured and injected into the liquid chromatograph, respectively, and the chromatograms were recorded. The hydrazine content was calculated using the external standard method based on peak areas.

Herein, the test results for 0% and 100% methanol are shown in Tables 10-11 below.

**Table 10. Detection results of hydrazine content in mmol/L hydrogen chloride aqueous solution**

| Sample name | Weight (mg) | Detected concentration (µg/mL) | Result (ppm) | Average (ppm) |
|---|---|---|---|---|
| 1min-1 | 13.15 | 0.1101 | 8.37 | 7 |
| 1min-2 | 13.29 | 0.0802 | 6.04 | |
| 2min-1 | 13.38 | 0.2228 | 16.65 | 13 |
| 2min-2 | 13.60 | 0.1381 | 10.15 | |
| 3min-1 | 13.36 | 0.2420 | 18.11 | 19 |
| 3min-2 | 13.38 | 0.2660 | 19.88 | |
| 5min-1 | 13.52 | 0.4268 | 31.57 | 34 |
| 5min-2 | 13.13 | 0.4800 | 36.56 | |
| 10min-1 | 13.46 | 1.2674 | 94.16 | 98 |
| 10min-2 | 13.45 | 1.3716 | 101.98 | |

**Table 11. Detection results of hydrazine content in mmol/L hydrogen chloride in methanol solution (100% methanol)**

| Sample name | Weight (mg) | Detected concentration (µg/mL) | Result (ppm) | Average (ppm) |
|---|---|---|---|---|
| 1min-1 | 13.66 | 0.0286 | 2.09 | 2 |
| 1min-2 | 13.31 | 0.0324 | 2.43 | |
| 2min-1 | 13.42 | 0.0291 | 2.17 | 2 |
| 2min-2 | 13.46 | 0.0311 | 2.31 | |
| 3min-1 | 13.65 | 0.0298 | 2.18 | 2 |
| 3min-2 | 13.85 | 0.0315 | 2.27 | |
| 5min-1 | 13.76 | 0.0375 | 2.73 | 3 |
| 5min-2 | 13.67 | 0.0363 | 2.66 | |
| 10min-1 | 13.48 | 0.0484 | 3.59 | 5 |
| 10min-2 | 13.58 | 0.0831 | 6.12 | |

It can be seen from the results in the above table that when using hydrogen chloride solutions with higher water content without prior removal of carbidopa by ion-exchange resin, the extent of hydrazine group participation in the derivatization reaction from the carbidopa structure increased with longer reaction times. This led to significant increases in hydrazine content, resulting in poor stability and accuracy of the detection results.

### Method validation:

### 1. Specificity

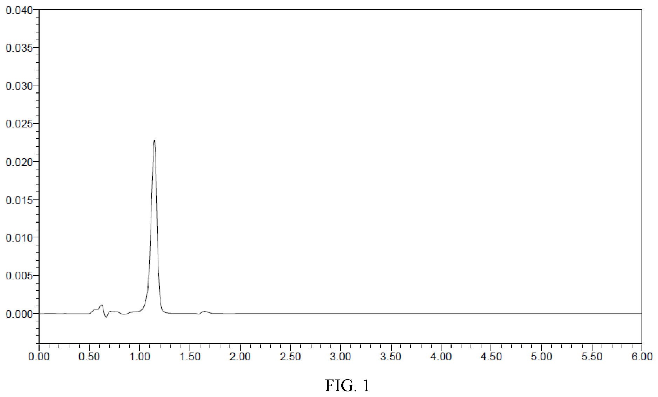

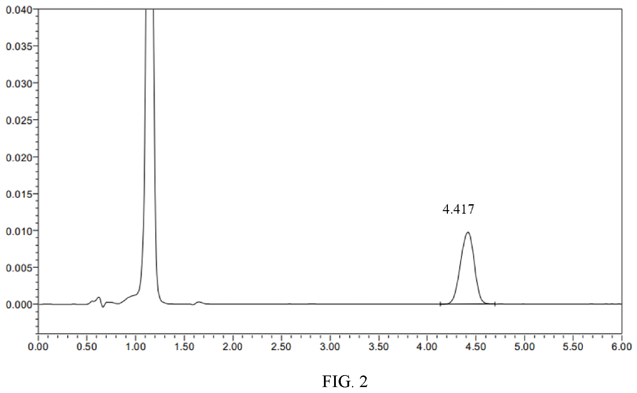

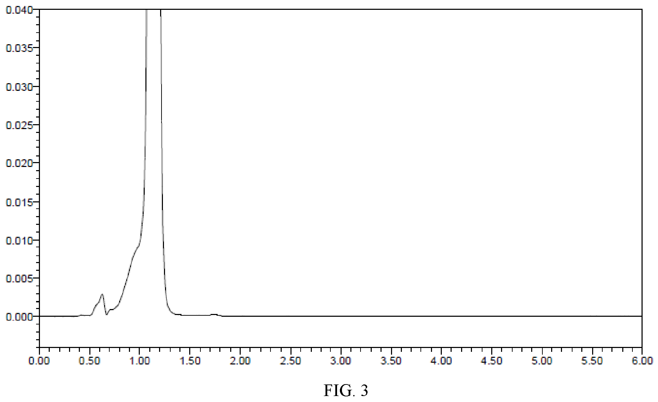

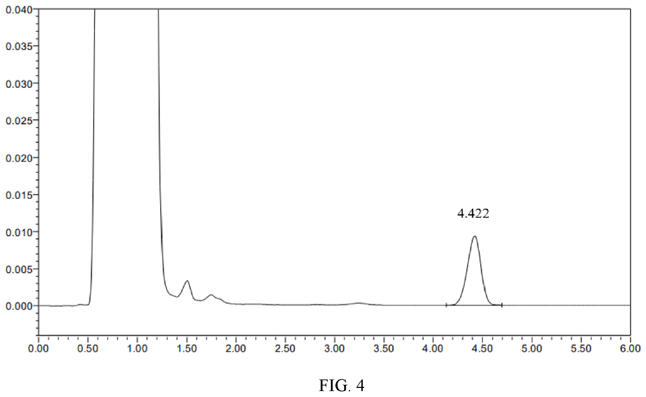

The blank excipients and blank solvents showed no interference with the detection of hydrazine, as detailed in the accompanying drawings (FIG. 1 to FIG. 4) of the specification.

### 2. System suitability

The reference solution was injected consecutively for 6 times (3 injections for STD1; 3 injections for STD2). The response factor RSD and tailing factors were calculated, with detailed results shown in Table 12. The system suitability test results met the requirements.

**Table 12. System suitability results for hydrazine in carbidopa-levodopa controlled-release tablets**

| Sample name | Response factor |
|---|---|
| STD1 | 1.531537×10⁵ |
| STD1 | 1.530268×10⁵ |
| STD1 | 1.529422×10⁵ |
| STD2 | 1.540544×10⁵ |
| STD2 | 1.536535×10⁵ |
| STD2 | 1.541482×10⁵ |
| Average | 1.534965×10⁵ |
| RSD % | 0.35 |
| Tailing factor | 0.9 |

### 3. Linearity and range

Six reference solutions at limit concentration levels were prepared, with one sample for each concentration, and each was measured once. The detailed results are shown in Table 13. The hydrazine content exhibited good linearity within the concentration range of 0.0624 µg/mL to 1.2490 µg/mL.

**Table 13. Detection results of linearity and range for hydrazine in carbidopa-levodopa controlled-release tablets**

| Concentration level | Concentration (µg/mL) | Peak area (µV*sec) |
|---|---|---|
| 10% | 0.0624 | 7670 |
| 40% | 0.2498 | 39155 |
| 60% | 0.3747 | 58365 |
| 100% | 0.6245 | 98883 |
| 150% | 0.9367 | 147697 |
| 200% | 1.2490 | 200309 |
| Correlation coefficient (R²) | 1.000 | |
| Intercept/100% concentration level reference peak area (%) | -2.03 | |
| Linear equation | Y=1.61×10⁵X-2.01×10³ | |

### 4. Accuracy test

An appropriate amount of the mixed powder of active pharmaceutical ingredients and excipients (equivalent to 12.5 mg of carbidopa) was accurately weighed, and hydrazine reference standards equivalent to 40%, 80%, 100%, and 120% of the limit concentration levels were added, respectively. Three parallel preparations were made for each concentration according to the method described in Example 9, and the detailed results are shown in Table 14. The average recovery rates of hydrazine at concentration levels of 40%, 80%, 100%, and 120% were all in the range of 70.0% to 130.0%, and the RSD of the detection results for the 9 samples was <15.0%, meeting the accuracy requirements.

**Table 14. Accuracy results for hydrazine in carbidopa-levodopa controlled-release tablets**

| Concentration level | Recovery(%) | Average % (n=3) | RSD % (n=3) | Average % (n=12) | RSD % (n=12) |
|---|---|---|---|---|---|
| 40% | 92.042 | 92.4 | 0.60 | 90.9 | 1.62 |
| | 92.042 | | | | |
| | 93.006 | | | | |
| 80% | 92.584 | 91.8 | 0.77 | | |
| | 91.519 | | | | |
| | 91.238 | | | | |
| 100% | 91.318 | 90.3 | 0.95 | | |
| | 89.807 | | | | |
| | 89.855 | | | | |
| 120% | 89.230 | 89.1 | 0.78 | | |
| | 89.685 | | | | |
| | 88.319 | | | | |

### 5. Repeatability

6 spiked test solutions (at 40% of the limit concentration level) were prepared in parallel, and the results are detailed in Table 15, indicating good repeatability.

**Table 15. Repeatability results for hydrazine in carbidopa-levodopa controlled-release tablets (n=6)**

| No. | Weight (mg) | Hydrazine content (µg/g) | Average (µg/g) | RSD % |
|---|---|---|---|---|
| 1 | 139.33 | 19.79 | | |
| 2 | 139.37 | 19.56 | | |
| 3 | 139.67 | 19.61 | 20 | 0.90 |
| 4 | 139.56 | 19.25 | | |
| 5 | 139.63 | 19.49 | | |
| 6 | 139.60 | 19.62 | | |

### 6. Limit of quantification and limit of detection

Preparation of the limit of quantification solution: The lowest concentration linear solution was diluted downward based on peak response until the signal-to-noise ratio of the main peak reached approximately 10, followed by 6 consecutive injections; preparation of the limit of detection solution: The limit of quantification solution was further diluted downward based on peak appearance until the signal-to-noise ratio of the main peak reached approximately 3. The concentrations of the limit of quantification and limit of detection were 0.0624 µg/mL and 0.0187 µg/mL, corresponding to concentration levels of 5 ppm and 1.5 ppm, respectively. The results are detailed in Tables 16-17. The results show that the present disclosure exhibits high detection sensitivity.

**Table 16. Results of limit of quantification (LOQ) and limit of detection (LOD) for hydrazine in carbidopa-levodopa controlled-release tablets**

| LOQ | | | LOD | | |
|---|---|---|---|---|---|
| Signal-to-noise ratio S/N | Concentration (µg/mL) | Concentration level | Signal-to-noise ratio S/N | Concentration (µg/mL) | Concentration level |
| 78 | 0.0624 | 5 ppm | 13 | 0.0187 | 1.5 ppm |

**Table 17. Results of repeatability detection for the limit of quantitation of hydrazine in carbidopa-levodopa controlled-release tablets (n=6)**

| Serial number | Peak area (µV*sec) | Signal-to-noise ratio S/N |
|---|---|---|
| 1 | 9214 | 90 |
| 2 | 9293 | 72 |
| 3 | 9400 | 57 |
| 4 | 9601 | 73 |
| 5 | 9651 | 73 |
| 6 | 9785 | 100 |
| Average | 9491 | N/A |
| RSD % | 2.35 | |

The results show that the specificity, system suitability, linearity and range, limit of quantitation and limit of detection, accuracy, and repeatability of this method all meet the validation requirements, making it suitable for the determination of hydrazine in WD-1603 products.

## Claims

1. A method for determining the content of hydrazine in a carbidopa-containing drug, comprising the following steps:
(1) mixing a test sample with an aldehyde substance in a solvent under the action of an acid, wherein the test sample is a carbidopa-containing drug, and the hydrazine in the test sample is derivatized with the aldehyde substance to obtain a test solution;
(2) detecting the content of hydrazine in the test solution;
the solvent is an alcohol solvent or a mixed solvent of an alcohol solvent and water;
in the solvent, the volume fraction of the alcohol solvent is 90% to 100%, wherein the volume fraction refers to the percentage of the alcohol solvent relative to the total volume of the solvent;
the alcohol solvent is one or more of methanol, ethanol, and isopropanol;
the aldehyde substance is one or more of benzaldehyde, salicylaldehyde, and dimethylaminobenzaldehyde.

2. The method for determining the content of hydrazine in the carbidopa-containing drug according to claim 1, wherein the method for determining the content of hydrazine in the carbidopa-containing drug satisfies one or more of the following conditions:
(1) in the solvent, the volume fraction of the alcohol solvent is 90%, 92%, 94%, 96%, 98%, or 100%;
(2) the alcohol solvent is methanol and/or ethanol;
(3) the concentration of the acid is 0.01 to 5 mmol/L; the concentration of the acid refers to the concentration of the acid in the reaction system of step (1);
(4) the acid is one or more of HCl, HNO₃, and trifluoroacetic acid;
(5) the test sample contains 2 mg to 50 mg of carbidopa;
(6) the carbidopa-containing drug is a carbidopa active pharmaceutical ingredient (preferably a carbidopa monohydrate active pharmaceutical ingredient) or a carbidopa-containing formulation;
(7) the aldehyde substance is benzaldehyde;
(8) the concentration of the aldehyde substance is 0.1% to 5%; the concentration of the aldehyde substance refers to the volume percentage concentration of the aldehyde substance in the reaction system of step (1);
(9) the time for derivatization is 1 to 10 minutes;
(10) the time from formulation of the test solution to injection for detection is within 10 minutes; and
(11) the detection method is a liquid chromatography method, a gas chromatography method, a thin-layer chromatography method, or an ultraviolet spectrophotometry method.

3. The method for determining the content of hydrazine in the carbidopa-containing drug according to claim 2, wherein the method for determining the content of hydrazine in the carbidopa-containing drug satisfies one or more of the following conditions:
(1) the alcohol solvent is methanol;
(2) the concentration of the acid is 0.02 mmol/L, 0.5 mmol/L, 1 mmol/L, or 5 mmol/L;
(3) the acid is HCl;
(4) the test sample contains 5 mg to 15 mg of carbidopa;
(5) the formulation is an immediate-release formulation or a controlled-release formulation, wherein the controlled-release formulation is preferably a sustained-release formulation;
(6) the concentration of the aldehyde substance is 0.2%, 0.8%, 1.6%, or 2%;
(7) the time for derivatization is 1 minute, 2 minutes, 3 minutes, 5 minutes, or 10 minutes;
(8) the time from formulation of the test solution to injection for detection is within 3 minutes; and
(9) the detection method is a liquid chromatography method.

4. The method for determining the content of hydrazine in the carbidopa-containing drug according to claim 3, wherein the method for determining the content of hydrazine in the carbidopa-containing drug satisfies one or more of the following conditions:
(1) the concentration of the acid is 0.5 mmol/L;
(2) the test sample contains 5 mg, 10 mg, 12.5 mg, or 15 mg of carbidopa;
(3) the carbidopa-containing formulation is a carbidopa tablet, a carbidopa-levodopa controlled-release tablet, a carbidopa-levodopa sustained-release capsule, a carbidopa-levodopa sustained-release tablet, a carbidopa-levodopa tablet, or an entacapone-carbidopa-levodopa tablet;
(4) the concentration of the aldehyde substance is 0.8%;
(5) the time for derivatization is 3 minutes; and
(6) the test solution is immediately subjected to injection for detection.

5. The method for determining the content of hydrazine in the carbidopa-containing drug according to claim 1, wherein the method for determining the content of hydrazine in the carbidopa-containing drug satisfies one or two of the following conditions:
(1) the operation for derivatization is vortexing, shaking, or stirring, preferably vortexing; and
(2) the derivatization further comprises a filtration step, such as filtration through a nylon filter membrane, wherein the nylon filter membrane preferably has a pore size of 0.45 µm.

6. The method for determining the content of hydrazine in the carbidopa-containing drug according to claim 5, wherein in step (1), the derivatization reaction system consists of the solvent, the acid, the carbidopa-containing drug, and the aldehyde substance.

7. The method for determining the content of hydrazine in the carbidopa-containing drug according to claim 1, wherein the method for determining further comprises a step of preparing a reference solution, for example, replacing the carbidopa-containing drug with a hydrazine reference substance (such as hydrazine dihydrochloride) and preparing the reference solution using the same method as the test solution in step (1) according to claim 1.

8. The method for determining the content of hydrazine in the carbidopa-containing drug according to claim 7, wherein when a liquid chromatography method is used for detection, the test solution and the reference solution are separately injected into a liquid chromatograph, preferably with an injection volume of 20 µL.

9. The method for determining the content of hydrazine in the carbidopa-containing drug according to claim 1, wherein the method for determining the content of hydrazine in the carbidopa-containing drug satisfies one or two of the following conditions:
(1) when a liquid chromatography method is used for detection, the chromatographic column in the liquid chromatography method is a Waters Xbridge C18 column; and
(2) when a liquid chromatography method is used for detection, mobile phase A is acetonitrile, mobile phase B is an aqueous solution of 0.01 to 0.1% disodium edetate, and the volume ratio of mobile phase A to mobile phase B is 25:75 to 75:25.

10. The method for determining the content of hydrazine in the carbidopa-containing drug according to claim 1, wherein the method for determining the content of hydrazine in the carbidopa-containing drug satisfies one or more of the following conditions:
(1) when a liquid chromatography method is used for detection, the chromatographic column in the liquid chromatography method is a Waters Xbridge C18 4.6-mm×10-cm 5 µm column;
(2) when a liquid chromatography method is used for detection, mobile phase A is acetonitrile, mobile phase B is an aqueous solution of 0.03% disodium edetate, and the volume ratio of mobile phase A to mobile phase B is 55:45;
(3) when a liquid chromatography method is used for detection, the detection wavelength is 310 nm;
(4) when a liquid chromatography method is used for detection, the flow rate is 1.5 mL/min; and
(5) when a liquid chromatography method is used for detection, the column temperature is 35°C.

11. The method for determining the content of hydrazine in the carbidopa-containing drug according to claim 1, wherein the method for determining the content of hydrazine in the carbidopa-containing drug satisfies one of the following schemes:
Scheme 1:
the method for determining the content of hydrazine in the carbidopa-containing drug comprises the following steps:
(1) mixing a test sample with benzaldehyde in methanol under the action of hydrogen chloride, wherein the test sample is a carbidopa-containing drug, and the hydrazine in the test sample is derivatized with the aldehyde substance to obtain a test solution;
(2) detecting the content of hydrazine in the test solution by a liquid chromatography method;
Scheme 2:
the method for determining the content of hydrazine in the carbidopa-containing drug comprises the following steps:
(1) mixing a carbidopa-containing drug with a solution of hydrogen chloride in methanol, then performing derivatization with a solution of benzaldehyde in methanol to obtain a test solution;
(2) detecting the content of hydrazine in the test solution by a liquid chromatography method;
Scheme 3:
the method for determining the content of hydrazine in the carbidopa-containing drug comprises the following steps:
(1) mixing a carbidopa-containing drug with 1 mL of a solution of 0.1 mmol/L, 2.5 mmol/L, or 5 mmol/L hydrogen chloride in methanol for 10 to 15 seconds, then performing derivatization with 4 mL of a solution of 0.25%, 1.0%, or 2.0% benzaldehyde in methanol to obtain a test solution;
(2) detecting the content of hydrazine in the test solution by a liquid chromatography method.
